# EUROPÄISCHE PATENTANMELDUNG

(11) **EP 3 706 140 A1**
(43) Veröffentlichungstag der Anmeldung: **09.09.2020**
(21) Anmeldenummer: 20161130.8
(22) Anmeldetag: 05.03.2020
(51) Int. Cl.: G21F 9/00, B08B 7/00, B23K 26/06

(54) **VORRICHTUNG UND VERFAHREN ZUR DEKONTAMINATION EINER WANDFLÄCHE EINES INSBESONDERE ROHRFÖRMIGEN HOHLKÖRPERS**

(30) Priorität: 06.03.2019 DE 102019105663; 13.03.2019 DE 102019106382
(71) Anmelder: Evekinger Rohr- und Profilwerke GmbH, 58791 Werdohl (DE); LASER on demand GmbH, 31303 Burgdorf (DE)
(72) Erfinder: MEIER, Norbert, 30938 Burgwedel (DE); Meier, Oliver, 30918 Burgwedel (DE)
(74) Vertreter: Scheffler, Jörg

(57) **Zusammenfassung**

Die Erfindung betrifft ein Verfahren und eine Vorrichtung zur Dekontamination einer Wandfläche eines rohrförmigen Hohlkörpers (3) durch eine fokussierte elektromagnetische Strahlung. Die elektromagnetische Strahlung wird hierzu in eine Lanze (6) eingekoppelt, die mittels eines Antriebs (21) sowohl in Pfeilrichtung (7) translatorisch, als auch um eine Längsachse (8) der Lanze (6) in Pfeilrichtung (22) rotatorisch beweglich angetrieben ist. Durch eine Öffnung in einer Aufnahme für den Hohlkörper (3) wird die Lanze (6) translatorisch mit einer vorbestimmten Vorschubgeschwindigkeit in Pfeilrichtung (7) eingefahren. Die eingekoppelte elektromagnetische Strahlung trifft im Strahlengang zunächst auf eine einstellbare Fokussieroptik und anschließend auf ein als Reflektor ausgeführtes Ablenkelement, an dem der Strahl um ca. 90° umgelenkt und auf die Wandfläche des Hohlkörpers (3) abgelenkt wird. Durch die überlagerte translatorische und rotatorische Bewegung wird so im Verlauf eines Arbeitszyklus die gesamte Wandfläche (2) von der fokussierten Strahlung erreicht und durch den hohen Energieeintrag die Anhaftungen abgetragen. Um diese abgetragenen Anhaftungen zuverlässig zu entfernen, weist ein einlassseitiges Lagermodul (9) eine Einlassöffnung für Druckluft auf, die an einem entsprechenden Auslass eines endseitigen Lagermoduls abgesaugt und zusammen mit den mitgeführten Partikeln einer nicht gezeigten Aufbereitungsanlage zugeführt wird.

## Beschreibung

Die Erfindung betrifft eine Vorrichtung und ein Verfahren zur Bearbeitung einer Wandfläche eines insbesondere rohrförmigen Hohlkörpers im oberflächennahen Bereich, insbesondere beim Rückbau kerntechnischer Anlagen, die eine Fokussieroptik mit zumindest einem Ablenkelement zur Fokussierung einer zugeführten elektromagnetischen Strahlung, insbesondere einer Laserstrahlung, auf einen punktförmigen Bereich der Wandfläche aufweist.

Beim Abbau und im Betrieb kerntechnischer Anlagen fällt in großem Umfang kontaminierter metallischer Schrott an, der beseitigt oder verwertet werden muss. Es ist üblich, diesen Schrott der sogenannten Schmelzdekontamination zu untererziehen. Dabei wird das Metall aufgeschmolzen. Einige die Kontamination verursachenden radioaktiven Stoffe, die sich vor dem Aufschmelzen auf der Oberfläche der Metallteile befunden haben, werden während des Schmelzdekontaminationsprozesses in die sich bildende Schlacke eingebunden. Die radioaktiven Elemente, wie beispielsweise Uran, Neptunium und Plutonium, sammeln sich in der Schlacke an. Ein solches Verfahren ist beispielsweise aus der DE 33 18 377 A1 bekannt.

Bei der DE 692 19 114 T2 wird die kontaminierte Oberfläche mit einem Laser aufgeschmolzen. Dabei werden die Kontaminationsstoffe in die Oberfläche eingeschmolzen und so fixiert. Zum sicheren Einschmelzen wird die Oberfläche mit einem gut schmelzbaren Material, wie beispielsweise Glas, beschichtet.

Gemäß der EP 0 091 646 B1 werden die Innenwände eines nuklearen Dampferzeugers mit einem Laser bestrahlt und die von der Oberfläche gelösten Kontaminationsstoffe abgesaugt.

Aus dem Stand der Technik sind auch bereits Vorrichtungen bekannt, mit denen im Umfeld von kerntechnischen Anlagen Trennprozesse durchgeführt werden können. So offenbart beispielsweise die DE 22 63 143 A1 eine Inspektions- und Reparatureinrichtung für Dampferzeuger, durch die verschiedene Mess- und Reparatureinrichtungen sowie Werkzeuge in Längsrichtung in die Rohre des Dampferzeugers eines Druckwasserreaktors geführt werden können.

Bei der DE 20 2018 100 057 U1 wird ein Hohlkörper in einer geschützten Atmosphäre mittels eines Laserbearbeitungswerkzeuges geöffnet, indem der Laserstrahl entlang der Außenwandfläche in Längsrichtung geführt wird, sodass Halbschalen entstehen. Die durch das thermische Trennverfahren mittels der Laserstrahlung entstehenden Emissionen werden durch eine Absaugung entfernt.

Die DE 44 45 171 C2 beschreibt ein Verfahren zum Zerlegen von Druckbehälter-Einbauten einer kerntechnischen Anlage durch Plasmaschneiden und das Trennen in transportfähige Teile.

Aus der DE 34 27 377 C2 ist ein Rohrtrennschergerät zum fernbedienbaren Trennen von Rohrleitungen, beispielsweise in Prozesszellen der kerntechnischen Wiederaufarbeitung mittels Schneidrollen bekannt.

Die EP 2 898 975 A1 betrifft ein Erodierverfahren zum Bearbeiten hohlzylindrischer Werkstücke, beispielsweise Rohre oder Leitungen, in einer kerntechnischen Anlage oder Reaktoranlage, die im eingebauten Zustand getrennt oder abgeschnitten werden können.

Aus der JP H07- 16 770 A ist bereits eine Vorrichtung zum Schweißen oder Schneiden eines Hohlkörpers bekannt, die eine Fokussieroptik mit zumindest einem Ablenkelement zur Fokussierung einer zugeführten elektromagnetischen Strahlung auf einen Bereich der Wandfläche aufweist. Hierzu hat die Vorrichtung eine in den Hohlkörper einführbare Lanze als Träger des Ablenkelements, welches zum Einbringen einer umlaufenden Durchbrechung in die Wandfläche und Trennen des Hohlkörpers rotatorisch mittels eines Antriebs antreibbar ist.

Ferner ist aus der JP 2016- 68 138 A eine Vorrichtung zur Laserbearbeitung mit einer drehbaren Lanze und mit einem Reflektor zur endseitigen Strahlumlenkung bekannt.

Vor dem Hintergrund der Schonung knapper werdender Ressourcen entsteht ein Anreiz für das Recycling von metallischen Reststoffen und deren Verwendung als Sekundärrohstoff in der Neuproduktion.

Als problematisch hat es sich erwiesen, dass bei Hohlkörpern, insbesondere bei Rohrleitungen mit kleinen Innendurchmessern, eine Beurteilung hinsichtlich ihres Kontaminationsgrads messtechnisch derzeit nicht zuverlässig möglich ist. Infolgedessen werden die Hohlkörper üblicherweise eingeschmolzen. Dabei ist die Minimierung des kontaminierten Abfallvolumens, insbesondere auch der zusätzlichen, durch den erforderlichen Trennprozess anfallenden losen Reststoffe und Partikel, im Hinblick auf die daraus folgende Kosteneinsparungen für das Recycling von entscheidender Bedeutung.

Der Erfindung liegt die Aufgabe zugrunde, eine Möglichkeit zu schaffen, die Dekontamination von Wandflächen eines Hohlkörpers wesentlich effizienter durchzuführen.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß weist die Vorrichtung zumindest eine mittels eines Antriebs der Vorrichtung mit einer durch eine Steuereinheit bestimmten Vorschubgeschwindigkeit translatorisch in dem Hohlkörper entlang der Wandfläche bewegliche Lanze auf, wobei zusätzlich zu der translatorischen Bewegung der Lanze das Ablenkelement relativ zu dem Hohlkörper insbesondere um die Längsachse der Lanze rotatorisch und/oder oszillierend beweglich antreibbar ist. Hierdurch wird erstmals die Möglichkeit geschaffen, selbst Hohlkörper mit sehr geringen Innendurchmessern im Bereich ab ca. 9 mm zuverlässig zu dekontaminieren und somit diese Hohlkörper einem Recycling zuzuführen, ohne diese zuvor öffnen zu müssen. Dabei entfällt der nach dem Stand der Technik aufwendige Zwischenschritt der Trennung der Hohlkörper in Längs- oder Querrichtung und auch die damit verbundene zusätzliche Behandlung der beim Trennen anfallenden Späne. Bei der erfindungsgemäßen Vorrichtung zur Dekontamination der Wandfläche von Hohlkörpern, die nicht zwingend rotationssymmetrisch sein müssen, dient eine Lanze als Träger der Fokussieroptik, die so problemlos selbst unter beengten Platzverhältnissen in den Hohlkörper eingeführt werden kann. Durch einen beispielsweise elektrischen oder auch pneumatischen Antrieb bewegt sich die Lanze translatorisch in den Hohlkörper hinein, wobei die Vorschubgeschwindigkeit einerseits von geometrischen Parametern der Wandfläche, andererseits von der Art und Beschaffenheit der Anhaftungen abhängig ist. Indem zumindest das Ablenkelement, vorzugsweise in Verbindung mit der Fokussieroptik, rotatorisch und/oder oszillierend drehbeweglich angetrieben wird, erreicht der von einer Strahlquelle zugeführte elektromagnetische Strahl sukzessive jeden Punkt auf der Wandfläche. In der Praxis kann dabei wahlweise eine kontinuierliche oder eine diskontinuierliche Vorschubbewegung vorgesehen werden, wobei die linienförmigen Wirkflächen des Strahls aufeinanderfolgender Umdrehungen einander vorzugsweise geringfügig überlappen. Obwohl insbesondere bei kreisförmigen Rohrquerschnitten die translatorische Bewegung parallel zu der Längsachse des Hohlkörpers ausreicht, kann die Vorrichtung zusätzlich weitere Bewegungsfreiheitsgrade quer zur Längsachse aufweisen, um so einen im Wesentlichen konstanten Abstand des Ablenkelements von der Wandfläche durch eine Querbewegung der Lanze einstellen zu können.

Dabei wird erstmals auch die Möglichkeit geschaffen, Hohlkörper mit sehr geringen Innendurchmessern im Bereich ab ca. 9 mm zuverlässig von innen nach außen zu bearbeiten und somit den Hohlkörper einem Recycling zuzuführen, ohne diesen zuvor öffnen zu müssen.

Die an der Wandfläche des Hohlkörpers abgetragene, kontaminierende Substanz kann eine radioaktive, biologische und/oder chemische Verunreinigung aufweisen.

Die Größe des punktförmigen Bereichs der Laserstrahlung auf der Wandfläche folgt dabei der erforderlichen Intensität der Behandlung und ist grundsätzlich von geringer flächiger Ausdehnung, jedoch wesentlich größer als null.

Dabei hat sich bereits eine Ausgestaltungsform der Erfindung als besonders vielversprechend erwiesen, bei welcher die Lanze eine Laserfreistrecke (Freistrahl) einschließt, sodass die Lanze eine Einkoppelfläche aufweist, durch die der Strahl in den als Hohlkörper ausgeführten Lanzenkörper eintritt und so auf die Fokussieroptik trifft. Während der translatorischen Vorschubbewegung der Lanze verändert sich die Länge dieser Freistrahlstrecke, sodass der Laserstrahl in unterschiedlichen Abständen auf die Fokussieroptik trifft. Hierdurch wird eine einfache Bauform realisiert.

Während bei einer auf die Längsachse beschränkten translatorischen Bewegung der Lanze eine Einkoppelfläche für eine Freistrahlstrecke des Strahls innerhalb der Lanze vorgesehen sein kann, ist demgegenüber eine direkte Einkopplung des Strahls in die Fokussieroptik mittels eines Lichtleiters ebenfalls möglich.

Bei der erfindungsgemäßen Vorrichtung dient eine Lanze als Träger der Fokussieroptik, die so problemlos selbst unter beengten Platzverhältnissen in den Hohlkörper eingeführt werden kann, wobei die Lanze gegebenenfalls auch flexibel oder quer zur Haupterstreckung auslenkbar sein kann.

Zur Positionierung wird die Lanze manuell in den Hohlkörper eingeführt, wobei vor allem bei sehr langen bzw. großen Hohlkörpern ein beispielsweise elektrischer oder auch pneumatischer Antrieb zur translatorischen Bewegung der Lanze in dem Hohlkörper vorgesehen sein kann.

Die rotatorische oder oszillierende Drehbewegung des Ablenkelements, vorzugsweise in Verbindung mit der Fokussieroptik, wird aktiviert, sobald die Trennstelle in dem Hohlkörper erreicht ist.

Obwohl insbesondere bei kreisförmigen Rohrquerschnitten die translatorische Bewegung parallel zu der Längsachse des Hohlkörpers ausreicht, kann die Vorrichtung zusätzlich weitere Bewegungsfreiheitsgrade quer zur Längsachse aufweisen, um so einen im Wesentlichen konstanten Abstand des Ablenkelements von der Wandfläche durch eine Querbewegung der Lanze einstellen zu können.

Obwohl die Erfindung grundsätzlich von einer rotatorischen Bewegung der Lanze bzw. des Ablenkelements ausgeht, kann selbstverständlich auch in einer kinematischen Umkehr der Hohlkörper entsprechend bewegt werden, indem der Hohlkörper mittels der Vorrichtung in eine entsprechende Bewegung um die Lanze versetzt wird.

Die Größe des punktförmigen Bereichs der Laserstrahlung auf der Wandfläche folgt dabei der erforderlichen Intensität der Behandlung und ist grundsätzlich von geringer flächiger Ausdehnung, jedoch wesentlich größer als null.

Die elektromagnetische Strahlung kann eine ultraviolette, sichtbare oder infrarote Wellenlänge haben und entweder gepulst oder kontinuierlich sein. Die elektromagnetische Strahlung kann von einem Laser erzeugt werden, beispielsweise von einem Gaslaser, beispielsweise einem CO₂-Gaslaser, einem Festkörperlaser, beispielsweise einem Nd-YAG-Laser, einem Excimer-Laser, einem Farbstofflaser, einem Freie-Elektronen-Laser oder einem Halbleiter-Laser.

Zur Strahlablenkung könnten verschiedene, an sich bekannte Elemente einschließlich akustooptischer oder elektrooptischer Modulatoren verwendet werden. Eine besonders vorteilhafte Ausführungsform der Erfindung wird hingegen dadurch realisiert, dass das Ablenkelement einen Reflektor und/oder ein Prisma aufweist.

Eine besonders praxisgerechte Ausführungsform der Erfindung wird auch dadurch erreicht, dass die Lanze eine Einlassöffnung für eine Gasströmung, insbesondere Luftströmung, und eine den Strahlengang der Strahlung einschließende Öffnung für die in die Lanze eingekoppelte Gasströmung aufweist. Hierdurch kann ein unerwünschtes Anhaften von Partikeln oder ein Niederschlag gasförmiger Substanzen auf dem Ablenkelement zuverlässig vermieden werden, indem der austretende elektromagnetische Strahl von einer Gasströmung eingeschlossen ist.

Eine andere, ebenfalls besonders vorteilhafte Ausführungsform der Erfindung wird auch dadurch erreicht, dass die an der Lanze zumindest einen um die Längsachse der Lanze drehbeweglich angeordneten Führungskörper zur Anlage an die Wandfläche des Hohlkörpers aufweist, wobei mehrere Führungskörper in axialer Richtung beiderseits der Öffnung für die elektromagnetische Strahlung vorgesehen sein können. Diese dienen als Widerlager bei der Drehbewegung des Ablenkelements und können beispielsweise abschnittsweise elastische Eigenschaften aufweisen. Besonders bevorzugt weist der Führungskörper eine polygonale Querschnittsform auf, um so eine unerwünschte axiale Verlagerung während der Drehbewegung zu vermeiden.

Darüber hinaus kann zumindest ein Führungskörper auch mit einem Spreizkörper zur vorübergehenden kraftschlüssigen Fixierung an der Innenwandfläche des Hohlkörpers ausgestattet sein.

Bei einer anderen vorteilhaften Ausgestaltungsform der Erfindung weist die Lanze ein Lichtleitelement, beispielsweise einen Lichtwellenleiter auf, durch welchen die elektromagnetische Strahlung der Fokussieroptik oder dem Ablenkelement zuführbar ist. Hierdurch ist die Vorrichtung nicht auf die Anwendung bei gestreckten Formen des Hohlkörpers beschränkt, sondern gestattet darüber hinaus die Anwendung bei einem bogenförmigen Verlauf des Hohlkörpers einschließlich Rohrbögen mit engen Radien. Hierzu hat die Lanze beispielsweise einen flexiblen oder aus mehreren beweglich verbundenen Segmenten aufgebauten Grundkörper, welcher dem Rohrverlauf problemlos folgen kann, wobei sich bereits eine selbsttätig in die gerade bzw. gestreckte Form zurückkehrende, elastisch verformbare Konstruktion als sinnvoll erwiesen hat. Das Lichtleitelement ist seinerseits flexibel und ist zweckmäßigerweise von dem Grundkörper eingeschlossen. Beispielsweise eignet sich hierzu eine Schraubenfeder oder ein Gittergeflecht als Grundkörper, der einen Lichtwellenleiter aufnimmt.

Dabei ist es besonders vorteilhaft, wenn die Lanze mit einem Signalgeber zur Erfassung der axialen Position oder der relativen Winkellage der Lanze gegenüber dem Hohlkörper ausgestattet ist, um so einen vollständigen Umlauf der Durchbrechung oder eine Dekontamination der Wandfläche in der gewünschten axialen Position und der entsprechenden Länge des Reststücks des Hohlkörpers zu gewährleisten. Ein solches beispielsweise elektrisches oder magnetisches Signal wird mittels der Steuereinheit detektiert und infolgedessen die weitere translatorische Vorschubbewegung wie auch die Drehbewegung des Ablenkelements unterbrochen, sowie darüber hinaus auch die Laserzufuhr abgeschaltet. Die Lanze wird anschließend in eine Ruheposition zurückgeführt, sodass der Hohlköper aus der Aufnahme entnommen werden kann.

Alternativ oder ergänzend kann die Vorrichtung auch mit einem Längenanschlag zur Begrenzung der axialen Einschubtiefe der Lanze in den Hohlkörper ausgestattet sein, um so in einfacher Weise eine konstante Einschubtiefe bei einer Vielzahl von zu bearbeitenden Hohlkörpern sicherzustellen.

Selbstverständlich kann im Bereich der Austrittsöffnung der elektromagnetischen Strahlung auch ein Sensor, insbesondere ein beispielsweise als Kamera ausgeführter Bildsensor angeordnet sein, um so dem Bediener mittels eines Displays der Vorrichtung einen schnellen visuellen Eindruck der Bearbeitungszone zu verschaffen. Dadurch eignet sich die Vorrichtung besonders bevorzugt auch als eine mobil mitführbare Handvorrichtung zur manuellen Betätigung.

Eine andere, ebenfalls besonders vorteilhafte Ausführungsform der Erfindung wird auch dadurch erreicht, dass die Vorrichtung eine der Lanze abgewandte Aufnahme zur lösbaren Halterung eines Endabschnitts des Hohlkörpers hat. Dabei wird der Hohlkörper vorzugsweise form- und/oder kraftschlüssig, beispielsweise mittels einer Fase oder durch einen Konus als endseitige Fixierung oder Einführhilfe vorzugsweise umfangsseitig gehalten, wobei ein in den Hohlkörper hineinreichender Halteabschnitt nicht grundsätzlich ausgeschlossen ist. Entsprechend der gewünschten Absaugfunktion ist die Aufnahme zusätzlich mit einer Öffnung für die Gasströmung ausgestattet.

Dabei hat es sich bereits als besonders praxisnah erwiesen, wenn die Aufnahme eine Vorspanneinheit zur Vorspannung der Aufnahme in axialer Richtung gegenüber dem Hohlkörper aufweist. Ein solche beispielsweise durch eine Federvorspannung bewirkte Vorspannung erleichtert einerseits die schnelle Fixierung des Hohlkörpers, indem der Hohlkörper lediglich entgegen der Vorspannrichtung in die Aufnahme eingebracht werden muss, bis eine kraftschlüssige Fixierung hergestellt ist. Andererseits wird so auch die notwendige druckdichte Verbindung zwischen der Aufnahme und dem Hohlkörper sichergestellt, um so die verlustfreie Absaugung zu ermöglichen.

Gemäß einer Variante weist die Vorrichtung eine in den Hohlkörper einführbare Lanze als Träger des Ablenkelements auf, welches zum Einbringen einer umlaufenden Durchbrechung in die Wandfläche und zum Trennen des Hohlkörpers in mehrere Abschnitte, insbesondere um die Längsachse der Lanze relativ zu dem Hohlkörper, mittels eines Antriebs rotatorisch oder oszillierend beweglich antreibbar ist. In überraschend einfacher Weise wird mittels der elektromagnetischen Strahlung, die vorzugsweise entlang einer Querschnittsebene des Hohlkörpers durch die Bewegung des Ablenkelements zu einem Durchtrennen der Wandfläche des Hohlkörpers führt, nicht nur eine sehr schnelle und vor allem weitestgehend partikelfreie Trennung erreicht. Vielmehr werden zugleich mögliche Anhaftungen an der Wandfläche, die sich gegebenenfalls infolge des Trennprozesses lösen könnten, zuverlässig dekontaminiert und können daher ohne Risiko für die Umwelt aufgefangen und entsorgt werden. Erstmals wird so ein Trennprozess geschaffen, welcher zu einer effizienten Reduzierung des kontaminierten Abfallvolumens führt. Im Gegensatz zu den üblichen Trennverfahren mit thermischer oder spanender Bearbeitung, erfolgt erfindungsgemäß die Bearbeitung von innen nach außen, sodass der energiereiche Strahl zunächst auf die Ablagerungen an der Wandfläche trifft und diese dekontaminiert, bevor es zu einer anschließenden Durchbrechung der Wandfläche kommt, durch die ungebundene Partikel nach außen dringen könnten.

Die erfindungsgemäße Aufgabe wird weiterhin noch mit einem Verfahren zur Bearbeitung zumindest eines insbesondere rohrförmigen Hohlkörpers, bei dem ein elektromagnetischer Strahl auf einen Bereich der Wandfläche abgelenkt wird, dadurch gelöst, dass das Ablenkelement und der Hohlkörper rotatorisch und/oder oszillierend bezogen auf die Hauptachse des Hohlkörpers relativ zueinander bewegt werden. Durch eine zeitlich getrennte oder überlagerte Abfolge der relativen Bewegung zwischen dem Hohlkörper und dem Ablenkelement überstreicht der Fokuspunkt die gesamte Wandfläche, wobei sich in der Praxis eine kreisringförmige oder eine schraubenlinienförmige Fokusfläche ergibt. Hierdurch wird es erstmals möglich, selbst vergleichsweise enge Innenraumflächen von insbesondere rohrförmigen Hohlkörpern sicher und zuverlässig und vor allem zerstörungsfrei zu dekontaminieren. Durch geeignete Sensoren, insbesondere auch Bildsensoren, kann der Abtragsfortschritt überwacht und die Bewegung entsprechend angepasst werden. Dadurch ergibt sich ein erheblich optimierter Bearbeitungsfortschritt, wobei zugleich eine reproduzierbare Abtragsleistung sichergestellt werden kann. In Verbindung mit einer Absaugung werden gasförmige, feste und gegebenenfalls auch flüssige Abtragsbestandteile zuverlässig abgeführt. Selbstverständlich können bedarfsweise bestimmte Längs- und/oder Umfangsabschnitte von der Bestrahlung ausgenommen werden.

Alternativ folgt durch die relative Drehbewegung zwischen dem Hohlkörper und dem Ablenkelement der Fokus einer geschlossenen Umfangslinie entlang der Wandfläche, wobei sich in der Praxis eine kreisringförmige Trennlinie ergibt. Durch geeignete Sensoren, insbesondere auch Bildsensoren, kann der Trennprozess überwacht und die Bewegung entsprechend angepasst werden. Dadurch ergibt sich ein erheblich optimierter Bearbeitungsfortschritt.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung einer Vorrichtung zur Dekontamination rohrförmiger Hohlkörper;
- Fig. 2: eine teilweise geschnittene Draufsicht der in Figur 1 gezeigten Vorrichtung mit drei Funktionselementen;
- Fig. 3: eine vergrößerte Schnittdarstellung eines ersten Funktionselements mit einem Antriebsmodul;
- Fig. 4: eine vergrößerte Schnittdarstellung eines zweiten Funktionselements mit einem einlasseitigen Lagermodul;
- Fig. 5: eine vergrößerte Schnittdarstellung eines dritten Funktionselements mit einem endseitigen Lagermodul;
- Fig. 6: eine geschnittene Seitenansicht einer Vorrichtung mit einer in einen rohrförmigen Hohlkörper einführbaren Lanze;
- Fig. 7: eine vergrößerte Detaildarstellung eines Kopfbereichs der Lanze;
- Fig. 8: eine perspektivische Darstellung der in Figur 2 gezeigten Kopfbereichs.

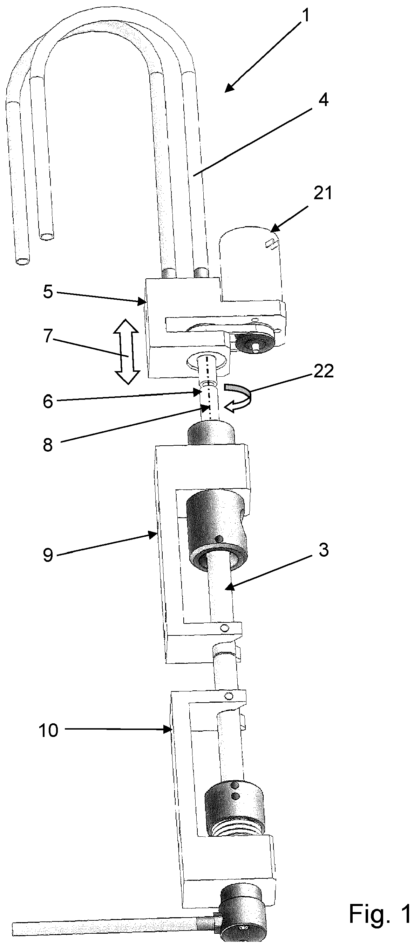

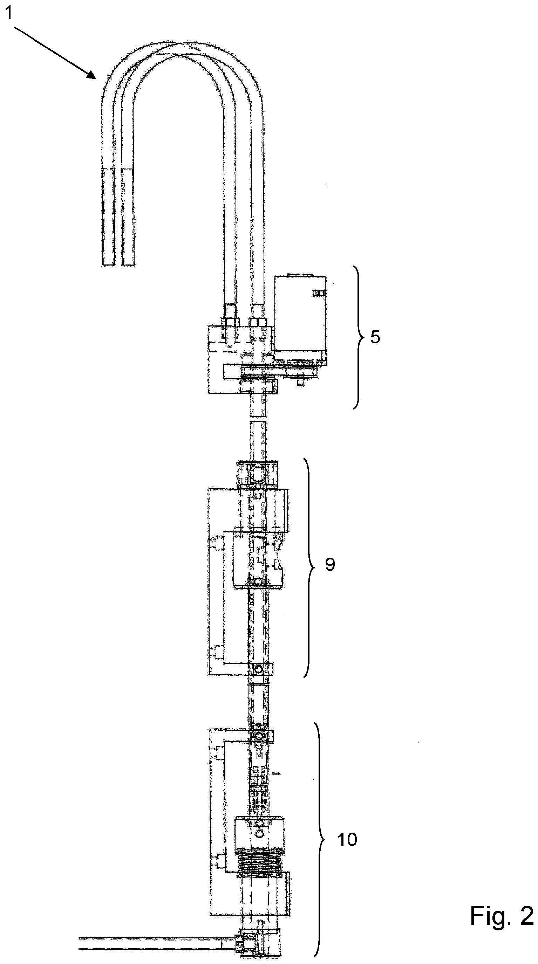

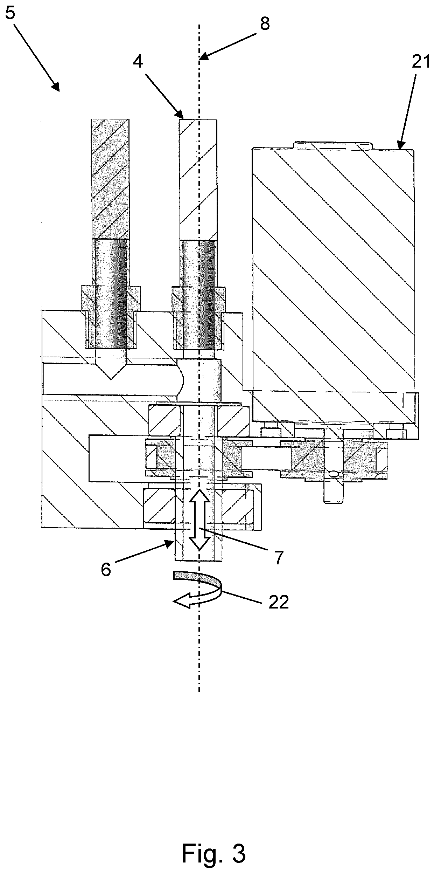

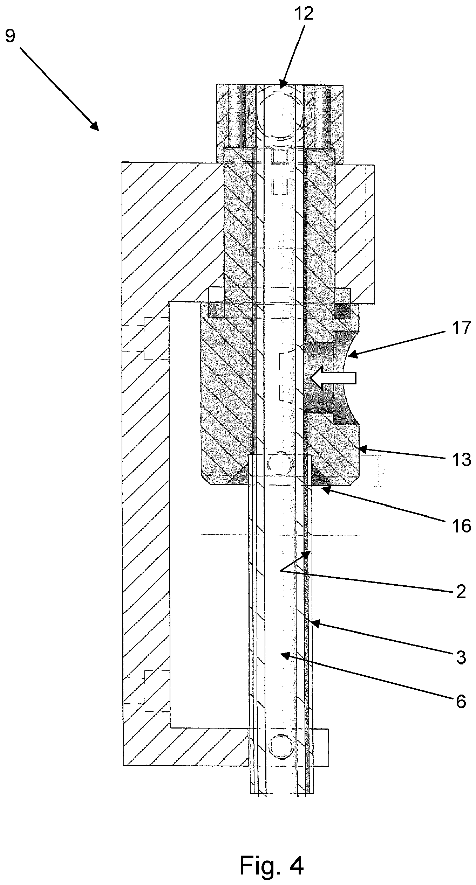

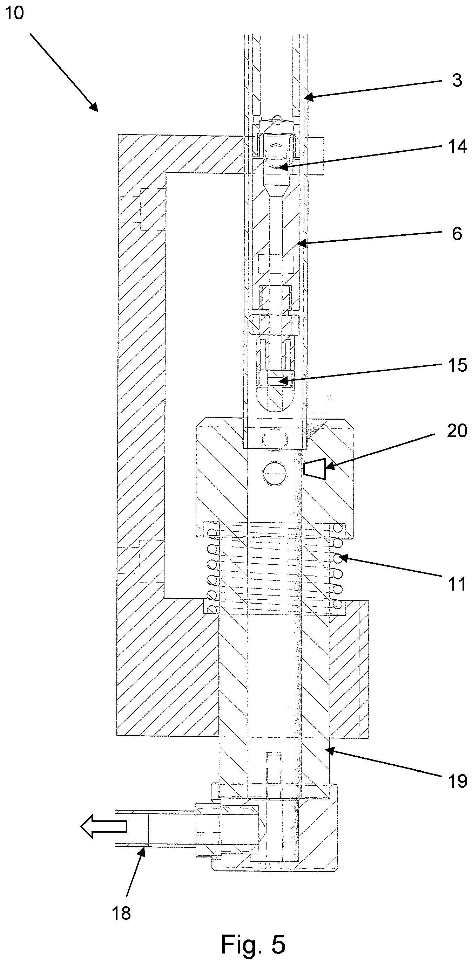

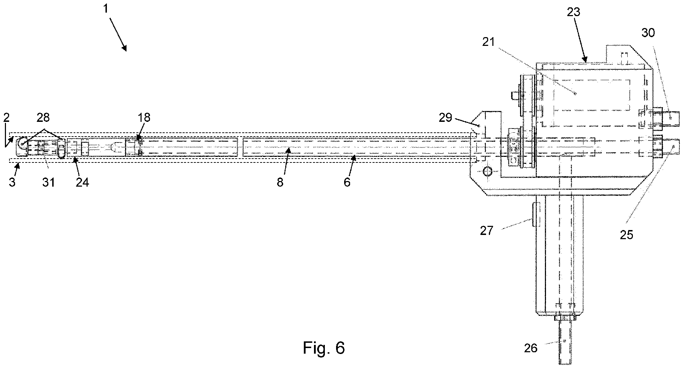

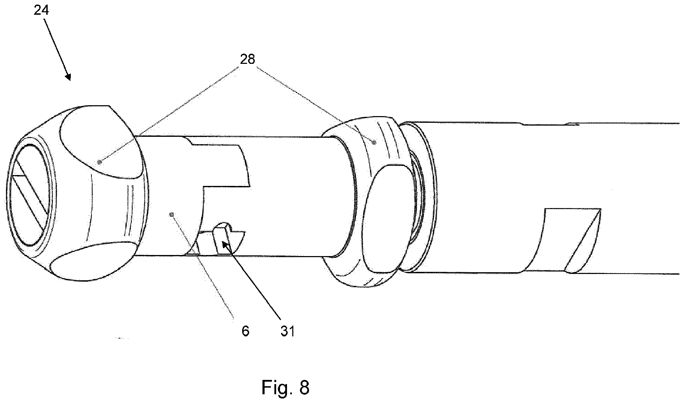

Eine erfindungsgemäße Vorrichtung 1 zur Dekontamination durch Abtrag von Anhaftungen an einer Wandfläche 2 eines rohrförmigen Hohlkörpers 3 wird nachstehend anhand der Figuren 1 bis 8 näher erläutert. Hierzu ist die Vorrichtung 1 mittels eines flexiblen Lichtwellenleiters 4 mit einer nicht gezeigten Strahlungsquelle verbunden. Die so zugeführte elektromagnetische Strahlung wird in einem in Figur 3 vergrößert dargestellten Antriebsmodul 5 in eine Lanze 6 eingekoppelt, die mittels eines Antriebs 21 sowohl in Pfeilrichtung 7 translatorisch als auch um eine Längsachse 8 der Lanze 6 in Pfeilrichtung 22 rotatorisch beweglich angetrieben ist. Der zu dekontaminierende Hohlkörper 3 ist zwischen einem einlassseitigen Lagermodul 9 und einem endseitigen Lagermodul 10 entgegen der Rückstellkraft eines in Figur 5 gezeigten Vorspannelements 11 kraftschlüssig fixiert und im Betrieb der Vorrichtung 1 drehfest und axial unbeweglich fixiert. Durch eine in Figur 4 gezeigte Öffnung 12 in einer Aufnahme 13 des einlassseitigen Lagermoduls 9 wird die Lanze 6 translatorisch mit einer vorbestimmten Vorschubgeschwindigkeit in Pfeilrichtung 7 in den Hohlkörper 3 eingefahren. Die eingekoppelte elektromagnetische Strahlung trifft im Strahlengang zunächst auf eine einstellbare Fokussieroptik 14 und anschließend auf ein als Reflektor ausgeführtes Ablenkelement 15, an dem der Strahl um ca. 90° umgelenkt und auf die Wandfläche 2 des Hohlkörpers 3 abgelenkt wird. Durch die überlagerte translatorische und rotatorische Bewegung wird so im Verlauf eines Arbeitszyklus die gesamte Wandfläche 2 von der fokussierten Strahlung erreicht und durch den hohen Energieeintrag die Anhaftungen abgetragen. Um diese abgetragenen Anhaftungen zuverlässig zu entfernen, weist das einlassseitige Lagermodul 9, wie in Figur 4 zu erkennen, an der einen Aufnahmekonus 16 aufweisenden Aufnahme 13 eine Einlassöffnung 17 für Druckluft auf, die an einem entsprechenden Auslass 18 an einer Aufnahme 19 des endseitigen Lagermoduls 10 abgesaugt und zusammen mit den mitgeführten Partikeln einer nicht gezeigten Aufbereitungsanlage zugeführt wird. Zusätzlich ist an der Aufnahme 19 des endseitigen Lagermoduls 10 ein hier lediglich beispielhaft dargestellter Signalgeber 20 zur Erfassung einer Endlage der Lanze 6 angeordnet, sodass bei Erreichen der Endlage die weitere Vorschubbewegung unterbrochen und die Lanze 6 in die Ausgangslage zurückgeführt werden kann.

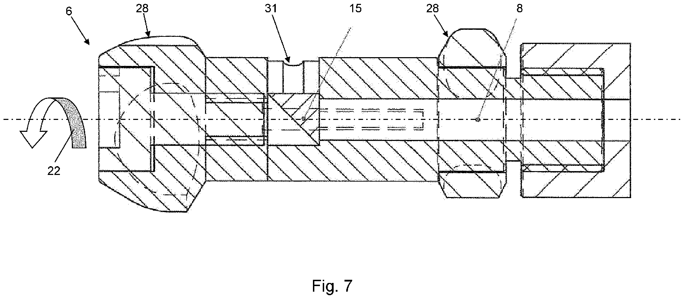

Gemäß einer Variante hat die Vorrichtung 1 ein Bedienelement 23, welches eine in den Hohlkörper 3 einführbare Lanze 6 auswechselbar aufnimmt. Mit ihrem einem Bearbeitungskopf 24 der Lanze 6 abgewandten stirnseitigen Ende ist die Lanze 6 mit einem Anschluss 25 für eine nicht gezeigte Strahlungsquelle verbunden. Die Einkopplung der elektromagnetischen Strahlung erfolgt, sobald das Bedienelement 23 mittels einer Leitung 26 mit einem nicht gezeigten Steuergerät verbunden ist und ein Schaltelement 27 betätigt wird. Durch die Betätigung des Schaltelements 27 wird einerseits die Zuführung der elektromagnetischen Strahlung, andererseits ein als Stellmotor ausgeführter elektrischer Antrieb 21 aktiviert, welcher die Lanze 6 in eine Rotation versetzt. Indem die Lanze 6 um ihre Längsachse 8 relativ zu dem Hohlkörper 3 in Pfeilrichtung 22 rotatorisch angetrieben wird, folgt der mittels einer Fokussieroptik 14 einstellbare und mittels eines in Figur 7 näher dargestellten, als Prisma ausgeführten Ablenkelements 15 auf die Wandfläche 2 des Hohlkörpers 3 abgelenkte Fokuspunkt einer Kreisbahn, sodass sich eine in der Querschnittsebene des Hohlkörpers 3 umlaufende Bearbeitungslinie auf der Wandfläche 2 des Hohlkörpers 3 ergibt. Die Intensität der Strahlung ist dabei so bemessen, dass es zu einer vollständigen Durchbrechung der Wandfläche 2 und schließlich zur Durchtrennung des Hohlkörpers 3 kommt. Während der Drehung liegen zwei gegenüber der Lanze 6 drehbewegliche Führungskörper 28 gegen die Wandfläche 2 an und verhindern dadurch eine unerwünschte seitliche Auslenkung während der Drehbewegung, wobei die translatorische Beweglichkeit nicht ausgeschlossen ist bzw. erhalten bleibt. Zugleich ist die axiale Position durch einen Längenanschlag 29 an dem Bedienelement 23 festgelegt, gegen dessen konkave Anlagefläche der Hohlkörper 3 während des Trennprozesses anliegt, wobei auch eine nicht gezeigte Fixierung vorgesehen sein kann. Um eine unerwünschte Ablagerung von Partikeln auf dem Ablenkelement 15 zu vermeiden, ist die Vorrichtung 1 mit einem Druckluftanschluss 30 ausgestattet, durch den im Inneren der Lanze 6 ein Überdruck sichergestellt ist. Die zugeführte Druckluft tritt gemeinsam mit der Strahlung durch eine Öffnung 31 in der Lanze 6 aus und wird durch eine nicht gezeigte Absaugung zusammen mit gelösten Partikeln einer Entsorgung zugeführt.

**BEZUGSZEICHENLISTE**

| | | | |
|---|---|---|---|
| 1 | Vorrichtung | 16 | Aufnahmekonus |
| 2 | Wandfläche | 17 | Einlassöffnung |
| 3 | Hohlkörper | 18 | Auslass |
| 4 | Lichtwellenleiter | 19 | Aufnahme |
| 5 | Antriebsmodul | 20 | Signalgeber |
| 6 | Lanze | 21 | Antrieb |
| 7 | Pfeilrichtung | 22 | Pfeilrichtung |
| 8 | Längsachse | 23 | Bedienelement |
| 9 | Lagermodul | 24 | Bearbeitungskopf |
| 10 | Lagermodul | 25 | Anschluss |
| 11 | Vorspannelement | 26 | Leitung |
| 12 | Öffnung | 27 | Schaltelement |
| 13 | Aufnahme | 28 | Führungskörper |
| 14 | Fokussieroptik | 29 | Längenanschlag |
| 15 | Ablenkelement | 30 | Druckluftanschluss |
| | | 31 | Öffnung |

## Patentansprüche

1. Vorrichtung (1) zur Dekontamination einer Wandfläche (2) eines insbesondere rohrförmigen Hohlkörpers (3), insbesondere beim Rückbau kerntechnischer Anlagen, wobei die Vorrichtung (1) eine Fokussieroptik (14) mit zumindest einem Ablenkelement (15) zur Fokussierung einer zugeführten elektromagnetischen Strahlung auf einen Bereich der Wandfläche (2) aufweist, wobei die Vorrichtung (1) eine mittels eines Antriebs (21) der Vorrichtung (1) mit einer durch eine Steuereinheit bestimmten Vorschubgeschwindigkeit translatorisch (Pfeilrichtung 7) in dem Hohlkörper (3) entlang der Wandfläche (2) bewegliche Lanze (6) aufweist und dass zusätzlich zu der translatorischen Bewegung der Lanze (6) das Ablenkelement (15) insbesondere um die Längsachse (8) der Lanze (6) rotatorisch (Pfeilrichtung 22) und/oder oszillierend beweglich antreibbar ist.

2. Vorrichtung (1) nach Anspruch 1, **dadurch gekennzeichnet, dass** das Ablenkelement (15) einen Reflektor und/oder ein Prisma aufweist.

3. Vorrichtung (1) nach Anspruch 1 oder 2, **dadurch gekennzeichnet, dass** die Lanze (6) eine Einlassöffnung (17) für eine Gasströmung, insbesondere Luftströmung, und eine den Strahlengang der Strahlung einschließende Öffnung (31) als Auslassöffnung für die in die Lanze (6) eingekoppelte Gasströmung aufweist.

4. Vorrichtung (1) nach zumindest einem der vorhergehenden Ansprüche, **dadurch gekennzeichnet, dass** die Öffnung (31) derart ausgeführt ist, dass die Gasströmung in einem Ringraum zwischen der Lanze (6) und der Wandfläche (2) des Hohlkörpers (3) entgegen der im Inneren der Lanze (6) auftretenden Gasströmung rückführbar ist.

5. Vorrichtung (1) nach zumindest einem der vorhergehenden Ansprüche, **dadurch gekennzeichnet, dass** der Fokussieroptik (14) die Gasströmung zur Temperierung, insbesondere zur Kühlung zuführbar ist.

6. Vorrichtung (1) nach zumindest einem der vorhergehenden Ansprüche, **dadurch gekennzeichnet, dass** die Gasströmung der Fokussieroptik (14) zur Vermeidung von strömungsbedingten Verlagerungen und/oder Verformungen von unterschiedlichen, insbesondere einander gegenüberliegenden Seiten zuführbar ist.

7. Vorrichtung (1) nach zumindest einem der vorhergehenden Ansprüche, **dadurch gekennzeichnet, dass** die Vorrichtung (1) zumindest einen um die Längsachse (8) der Lanze (6) drehbeweglich angeordneten Führungskörper (28) zur Anlage an die Wandfläche (2) des Hohlkörpers (3) aufweist.

8. Vorrichtung (1) nach Anspruch 7, **dadurch gekennzeichnet, dass** der Führungskörper (28) für eine kontinuierliche Vorschubbewegung während der Dekontamination, insbesondere während der rotatorischen und/oder oszillierenden Bewegung des Ablenkelements (15), gleit- und/oder rollfähig an der Wandfläche (2) des Hohlkörpers (3) anlegbar ist.

9. Vorrichtung (1) nach Anspruch 7 oder 8, **dadurch gekennzeichnet, dass** zumindest ein Führungskörper (28) eine polygonale Querschnittsform aufweist.

10. Vorrichtung (1) nach zumindest einem der vorhergehenden Ansprüche, **dadurch gekennzeichnet, dass** die Vorrichtung (1) mit einem Signalgeber (20) zur Erfassung der axialen Position der Lanze (6) und/oder zur Erfassung der relativen Winkellage der Lanze (6) gegenüber dem Hohlkörper (3) ausgestattet ist.

11. Vorrichtung (1) nach zumindest einem der vorhergehenden Ansprüche, **dadurch gekennzeichnet, dass** die Vorrichtung (1) ein Lichtleitelement, beispielsweise einen Lichtwellenleiter (4) aufweist, durch welches die elektromagnetische Strahlung der Fokussieroptik (14) zuführbar ist.

12. Vorrichtung (1) nach zumindest einem der vorhergehenden Ansprüche, **dadurch gekennzeichnet, dass** die Vorrichtung (1) einen Längenanschlag (29) zur Begrenzung der axialen Einschubtiefe der Lanze (6) in den Hohlkörper (3) aufweist.

13. Vorrichtung (1) zur Bearbeitung zumindest eines insbesondere rohrförmigen Hohlkörpers (3), wobei die Vorrichtung (1) eine Fokussieroptik (14) mit zumindest einem Ablenkelement (15) zur Fokussierung einer zugeführten elektromagnetischen Strahlung auf einen Bereich der Wandfläche (2) aufweist, **dadurch gekennzeichnet, dass** die Vorrichtung (1) eine in den Hohlkörper (3) einführbare Lanze (6) als Träger des Ablenkelements (15) aufweist, welches zum Einbringen einer umlaufenden Durchbrechung in die Wandfläche (2) und Trennen des Hohlkörpers (3) in mehrere Abschnitte, insbesondere um die Längsachse (8) der Lanze (6) relativ zu dem Hohlkörper (3) rotatorisch (Pfeilrichtung 22) und/oder oszillierend beweglich mittels eines Antriebs (21) antreibbar ist.

14. Verfahren zur Bearbeitung zumindest eines insbesondere rohrförmigen Hohlkörpers (3) und/oder zur Dekontamination von Wandflächen (2) eines Hohlkörpers (3), bei dem ein elektromagnetischer Strahl, insbesondere Laserstrahl, auf einen punktförmigen Bereich der Wandfläche (2) mittels eines Ablenkelements (15) fokussiert und abgelenkt wird, wobei das Ablenkelement (15) und der Hohlkörper (3) rotatorisch und/oder oszillierend bezogen auf eine Längsachse der Lanze (6) relativ zueinander angetrieben werden.

15. Verfahren (1) nach Anspruch 14, **dadurch gekennzeichnet, dass** die durch die fokussierte Strahlung Anhaftungen abgetragen und/oder eine über den gesamten Umfang verlaufende Durchbrechung in der Wandfläche (2) erzeugt werden.
